# DEMANDE DE BREVET EUROPEEN

(11) **EP 1 580 472 A1**
(43) Date de publication de la demande: **28.09.2005**
(21) Numéro de dépôt: 04290792.3
(22) Date de dépôt: 24.03.2004
(51) Int. Cl.: F16L 7/00, H02G 1/08

(54) **Câblage à la demande dans une gaine**

(71) Demandeur: FRANCE TELECOM, 75015 Paris (FR)
(72) Inventeur: Blanchard, Anne-Marie, 22560 Pleumeur Bodou (FR); Lecoq, Daniel, 22140 Berthet (FR); Petit, Alain, 22140 Pluzunet (FR)
(74) Mandataire: Cabinet Martinet & Lapoux

(57) **Abrégé**

Un ruban mince (2) auquel est agrafée une extrémité d'un câble de télécommunications (6i), tel qu'un câble à fibres optiques compact, est tiré dans une gaine (1). Le ruban est semi-rigide pour être courbé transversalement afin que le ruban passe sur des câbles déjà installés (6) dans la gaine. La gaine peut être remplie presque entièrement et progressivement selon des demandes d'installation de câbles dans la gaine. Après qu'un câble soit installé, le ruban est conservé dans la gaine ou retiré de la gaine.

## Description

La présente invention concerne un dispositif et un procédé de câblage pour installer à la demande des câbles de télécommunications dans une gaine cheminant dans des sites comme des locaux ou des immeubles, qu'ils soient professionnels ou résidentiels.

Le câblage est plus particulièrement relatif à des câbles de télécommunications à fibres optiques.

Le besoin croissant en débit des clients a conduit les opérateurs de télécommunications à imaginer une solution de câblage optique à la demande dans une gaine. La saturation des chemins de câbles est_ effective dans beaucoup de sites. Actuellement des câbles pré-installés comportant un nombre élevé de fibres optiques ne sont pas exploités dans leur totalité.

Cette solution de câblage optique apporte une offre à bas coût pour câbler des clients de plus en plus volatils et exigeants sur les délais de raccordement. Elle consiste à réserver un espace dans des infrastructures en y posant un réseau de gaines standard. Les câbles optiques sont installés dans les gaines à la demande des clients.

Grâce au développement récent de câbles à fibres optiques très compacts, tels que des structures à rubans ou à gaines de maintien minces, également appelées microgaines, le diamètre de ces câbles optiques est de quelques millimètres, ce qui permet d'installer plusieurs câbles dans une seule gaine.

On connaît par le brevet français 2746166 un dispositif d'aiguillage destiné à être utilisé dans une conduite déjà occupée par des câbles de télécommunications à conducteurs métalliques et un pousseur mécanique destiné à pousser le dispositif d'aiguillage dans la conduite.

Le dispositif d'aiguillage, encore appelé "aiguille", forme une séparation dans la conduite déjà partiellement occupée par des câbles de télécommunications, par exemple des câbles téléphoniques. Le pousseur fait avancer le dispositif d'aiguillage dans la conduite. Le dispositif d'aiguillage est constitué d'un profilé plat présentant une grande rigidité transversale et une largeur constante inférieure au diamètre intérieur de la conduite, mais la plus voisine de celui-ci, de manière que le dispositif d'aiguillage puisse être introduit au-dessus des câbles existants dans la conduite, tout en frottant par des bourrelets latéraux longitudinaux contre l'intérieur de la conduite.

Le dispositif d'aiguillage en forme de profilé plat très rigide partage en deux espaces semi-cylindriques l'intérieur de la gaine et ne permet pas d'installer une grande quantité de câbles dans une gaine et de les organiser dans la gaine et surtout d'installer des câbles dans la gaine les uns après les autres au fur et à mesure de demandes de clients. En effet, plus les câbles sont nombreux dans la gaine, plus il est difficile, voire impossible, de pousser le dispositif d'aiguillage à l'intérieur de la gaine encombré par les câbles.

L'invention a pour objectif de fournir un dispositif de câblage pour installer un nombre élevé de câbles de télécommunications dans une gaine de manière à la remplir presque entièrement et progressivement selon des demandes d'installation de câbles dans la gaine sans que l'installation d'un câble perturbe la transmission dans des câbles déjà installés dans la gaine.

Pour atteindre cet objectif, un dispositif de câblage pour installer un câble de télécommunications dans une gaine sensiblement cylindrique comprend un ruban mince ayant une largeur sensiblement égale au diamètre intérieur de la gaine et plus long que la gaine, et un moyen pour fixer une extrémité du câble à installer contre une première face du ruban, et est caractérisé en ce que le ruban est en une matière semi-rigide pour être courbé transversalement en ayant des chants longitudinaux qui sont en contact avec la surface intérieure de la gaine afin que le ruban passe sur des câbles déjà installés dans la gaine et divise la gaine en un premier espace délimité par la première face du ruban de tirage, contenant les câbles déjà installés et recevant le câble à installer et un deuxième espace ne contenant aucun câble.

Au ruban, dit "ruban de tirage", peuvent être fixés un ou plusieurs câbles pour être simultanément tirés dans la gaine. Le caractère semi-rigide, voire souple, transversalement du ruban de tirage permet au ruban de tirage d'être introduit toujours au-dessus des éventuels câbles existants déjà installés dans le premier espace de la gaine. Le dernier câble installé s'étend toujours au-dessus des autres câbles déjà installés pour éviter un mélange avec ceux-ci. En aucun cas il n'y a de câble au-dessus du ruban de tirage, dans le deuxième espace.

Suivant d'autres caractéristiques du dispositif de câblage de l'invention, le moyen pour fixer peut comprendre une agrafe ou un clip fixé à force dans le ruban, ou deux éléments auto-agrippants par contact, sur le ruban de tirage étant fixé l'un des éléments auto-agrippants contre lequel l'autre élément auto-agrippant est pressé manuellement afin d'enserrer l'extrémité du câble à installer. Après que le câble soit installé, le moyen pour fixer est retiré afin de libérer l'extrémité du câble pour la connecter par exemple à des équipements optroniques. Après cette opération, le ruban de tirage est conservé dans la gaine pour éventuellement tirer un câble suivant. Le ruban est toujours conservé dans la gaine, même si celle-ci est remplie, pour un éventuel changement ou remplacement du câble.

L'invention concerne également un procédé de câblage pour installer un câble de télécommunications dans une gaine sensiblement cylindrique, par l'intermédiaire d'un ruban mince et d'un moyen de fixation d'un dispositif de câblage selon l'invention. Le procédé de câblage est caractérisé en ce qu'on tire à travers la gaine le ruban, qui est en une matière semi-rigide, en le courbant transversalement avec des chants longitudinaux en contact avec la surface intérieure de la gaine afin que le ruban passe sur des câbles déjà installés dans la gaine et divise la gaine en un premier espace délimité par la première face du ruban, contenant les câbles déjà installés et recevant le câble à installer et un deuxième espace ne contenant aucun câble.

Suivant d'autres caractéristiques du procédé de câblage, on utilise des moyens de raccordement démontables présentant une branche de dérivation pour faire des dérivations de câbles localisées dans des pièces différentes.

Lorsqu'un moyen de raccordement doit être monté sur la gaine à un endroit de dérivation, on coupe la gaine à un endroit de dérivation en deux tronçons de gaine, et on raccorde les extrémités des deux tronçons de gaine par un moyen de raccordement ouvert présentant une branche de dérivation. On coupe le ruban à l'endroit de dérivation en deux tronçons de ruban. On fixe devant l'une des extrémités de l'ensemble continu de l'un des tronçons de gaine et de la branche de dérivation par un moyen de fixation l'extrémité du câble à installer sur le tronçon de ruban s'étendant dans le tronçon de gaine. On tire le tronçon de ruban équipé du moyen de fixation en direction de la branche de dérivation, c'est-à-dire jusqu'à ce qu'au moins l'extrémité fixée du câble, apparaisse en sortie de l'autre extrémité dudit ensemble continu de l'un des tronçons de gaine et de la branche de dérivation. On reprend dans le tronçon de gaine accessible sur le moyen de raccordement ouvert une extrémité du tronçon de ruban de tirage qui a été libérée du moyen de fixation pour la relier, par exemple par agrafage, à l'extrémité de l'autre tronçon de ruban de tirage qui avait été laissée dans l'autre tronçon de gaine, et on referme le moyen de raccordement ; par exemple lorsque le moyen de raccordement est composé de deux demi-raccords, on referme le raccord en rabattant l'un des demi-raccords sur l'autre demi-raccord.

Pour installer un autre câble en intervenant à nouveau dans la gaine, on ouvre le moyen de raccordement raccordant deux tronçons de gaine, on coupe le ruban dans le moyen raccordement ouvert en deux tronçons de ruban, puis on fixe l'extrémité du câble à installer sur le ruban et on tire le ruban de la même manière que lors du montage du moyen raccordement.

Selon une autre variante du procédé, on reprend, avant de refermer le moyen raccordement, dans le tronçon de gaine accessible dans le moyen raccordement ouvert une extrémité du tronçon de ruban de tirage, qui a été libérée du moyen de fixation, pour la relier à l'extrémité de l'autre tronçon de ruban qui avait été laissée dans l'autre tronçon de gaine, on referme le moyen raccordement, on fixe par un moyen de fixation l'extrémité d'un autre câble à installer sur le ruban devant ladite une extrémité de l'ensemble continu de l'un des tronçons de gaine et de la branche de dérivation, et on tire le tronçon de ruban équipé du moyen de fixation jusqu'à ce qu'au moins l'extrémité fixée du câble apparaisse à l'extrémité libre de l'autre tronçon de gaine.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est une vue en perspective d'un rail de chemin de câble avec une gaine comprenant un dispositif de câblage selon l'invention ;
- la figure 2 est un détail de la figure 1 montrant une extrémité de la gaine avec le dispositif de câblage au-dessus de trois câbles à fibres optiques ;
- la figure 3 est une vue en perspective d'une goulotte avec une gaine comprenant un dispositif de câblage selon l'invention ;
- la figure 4 est une coupe transversale d'une gaine avec le dispositif de câblage selon l'invention auquel est suspendue l'extrémité d'un câble à fibres optiques à installer dans la gaine ;
- la figure 5 est un détail de la figure 4 montrant l'extrémité du câble à installer appliquée contre et sous un ruban de tirage du dispositif de câblage ;
- la figure 6 est une coupe transversale analogue à la figure 4 montrant le ruban de tirage sous forme courbée en partie supérieure de la gaine au-dessus de nombreux câbles à fibres optiques déjà installés ;
- la figure 7 est une vue en coupe longitudinale d'un chemin de câble pour installer sans raccord un câble à fibres optiques au moyen d'un dispositif de câblage et de réserves de ruban de tirage et de gaine ;
- la figure 8 est une vue schématique en perspective montrant l'installation du câble à fibres optiques sans raccord selon la figure 7, dans le contexte d'un central téléphonique, suivant un cheminement de deux gaines distinctes incluant des dispositifs de câblage, depuis une salle de répartiteur équipée de réserves de ruban de tirage et de gaine vers deux autres salles distinctes ;
- la figure 9 est une vue schématique de dessus d'un couloir dans un immeuble, doté de deux chemins de câble contenant des gaines avec le dispositif de câblage et présentant des raccords pour des dérivations vers des pièces ;
- la figure 10 est une vue schématique en perspective montrant un autre cheminement de gaine avec le dispositif de câblage, dans un central téléphonique situé à l'intérieur d'un immeuble ;
- les figures 11 et 12 sont des vues en perspective d'un raccord respectivement à l'état fermé et à l'état ouvert ;
- la figure 13 est une vue en coupe axiale d'une gaine dans laquelle est installé un câble à fibres optiques par l'intermédiaire d'une coupe de la gaine et insertion d'un raccord ouvert pour dérivation ;
- la figure 14 est une vue en coupe axiale d'une gaine avec un raccord ouvert dans laquelle est installé le câble optique dérivé selon la figure 13, et le ruban de tirage est raccordé au tronçon du ruban coupé précédemment selon la figure 13 ;
- la figure 15 est une vue axiale à travers une gaine pour installer et dériver un câble à fibres optiques depuis une réserve de câble située dans une pièce différente de celle contenant une réserve de ruban de tirage ;
- la figure 16 est une vue schématique en perspective montrant l'installation du câble à fibres optiques selon la figure 15, dans le contexte d'un central téléphonique, suivant un autre cheminement de la gaine de câble incluant un dispositif de câblage et équipée d'un moyen de raccordement, depuis deux salles distinctes équipées d'une réserve de ruban de tirage et d'une réserve de gaine vers une salle de répartiteur ; et
- la figure 17 est une vue schématique en perspective montrant l'installation d'un câble à fibres optiques selon la figure 13, dans le contexte d'un central téléphonique, suivant le cheminement d'une gaine incluant un dispositif de câblage et équipée d'un moyen de raccordement, depuis une salle de répartiteur équipée de réserves de ruban de tirage et de gaine vers une autre salle distincte.

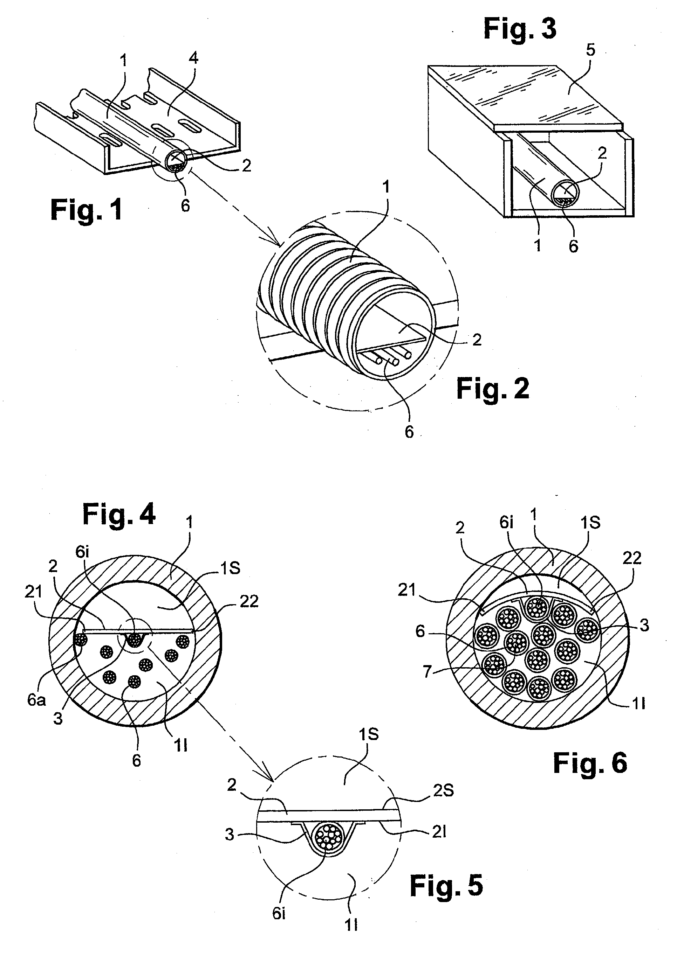

Le dispositif de câblage intérieur à la demande selon l'invention dans une gaine 1 est illustré aux figures 1 à 6. La gaine 1 est sensiblement cylindrique, bien souvent annelée, ou parfois lisse, et en matière plastique. Elle a une longueur pouvant atteindre 50 m à 100 m environ et peut être développée dans un rail de chemin de câble 4 suspendu au plafond, comme montré à la figure 1, et/ou dans une goulotte 5 dans une colonne montante ou le long d'un mur, comme montré à la figure 3, à l'intérieur d'un immeuble de bureaux et/ou d'habitation par exemple.

Le dispositif de câblage comprend essentiellement un ruban de tirage 2 et une agrafe 3.

Le ruban de tirage 2 est mince et a une épaisseur de l'ordre de 0,5 mm. Il est plat lorsqu'il ne subit aucune contrainte, présente une largeur constante sensiblement égale au diamètre intérieur de la gaine 1 et est plus long que la gaine afin de tirer un câble à travers la gaine. Par exemple le ruban de tirage 2 est un profilé plat souple en un feuillard thermoplastique extrudé, de préférence chargé d'éléments de renforcement tels que des fibres de verre ; le ruban de tirage 2 peut également être tissé ou tressé en fibres de polymère tel que polypropylène, polyéthylène ou polyamide, et être de préférence chargé d'éléments de renforcement. Le ruban de tirage 2 présente un faible coefficient de frottement afin qu'il glisse facilement dans la gaine et sur des câbles de télécommunications à fibres optiques 6 déjà installés dans la gaine, comme montré aux figures 4 et 6. La résistance à la rupture transversale du ruban de tirage 2 est telle qu'elle permette la division de l'intérieur de la gaine 1 en deux espaces 1I et 1S, un espace 1I occupé par les câbles et un espace 1S sans câble. Le ruban de tirage 2 se déforme sous la poussée des câbles déjà pré-installés, comme montré à la figure 6. Le ruban de tirage 2 est en une matière semi-rigide afin d'être déformé longitudinalement pour suivre les courbures de la gaine 1, tout en pouvant revenir sensiblement à son état plat et ses dimensions d'origine dès qu'il n'est plus soumis à des contraintes. Le ruban de tirage 2 présente une résistance à la rupture en traction longitudinale nettement plus élevée que la traction, au plus d'environ 200 N, qui doit être exercée à l'une de ses extrémités pour le tirer dans la gaine 1.

L'agrafe 3 peut être une simple agrafe métallique connue en U, ou un clip en matière plastique ou en métal avec une section sensiblement en oméga majuscule, dont les extrémités forment de petites pattes, ou ont des dents, qui pénètrent et sont fixées à force dans le ruban de tirage 2 pour appliquer contre celui-ci l'extrémité d'un câble à fibres optiques 6i à installer.

Selon une autre réalisation, l'agrafe 3 est remplacé par un moyen de fixation comportant deux petits éléments plats auto-agrippants par contact qui enserrent l'extrémité du câble à fibres optiques 6i à installer. Sur le ruban de tirage 2 est fixé par collage l'un des éléments auto-agrippants contre lequel l'autre élément auto-agrippant est pressé manuellement afin d'enserrer l'extrémité du câble 6i.

Un ou plusieurs câbles de télécommunications à fibres optiques compacts 6 sont installés dans la gaine 1 en les tirant individuellement ou ensemble. Chaque câble 6 peut comprendre d'une manière connue un tube relativement rigide contenant une ou plusieurs fibres optiques 7 avec découplage mécanique entre le tube et les fibres, ou une microgaine de maintien mince souple enserrant une ou plusieurs fibres optiques 7 avec couplage mécanique entre la microgaine et les fibres. Le nombre de fibres optiques 7 dans le câble peut atteindre 12 environ. Le tube ou la microgaine et les fibres optiques constituent un module qui peut constituer à lui seul le câble 6, ou peut être inclus seul ou avec d'autres modules dans une gaine ou enveloppe externe du câble munie ou non d'une structure porteuse. Le câble 6 a un diamètre extérieur de quelques millimètres, par exemple compris entre 2 mm environ et 3 mm environ. Plusieurs câbles à fibres optiques 6, par exemple jusqu'à 12 câbles environ, peuvent être inclus progressivement à la demande dans la gaine 1 qui a un diamètre intérieur de quelques dizaines de millimètre, typiquement de 22 mm.

En variante, le dispositif de câblage est utilisé pour introduire un ou plusieurs câbles de télécommunications compacts à conducteurs métalliques, et éventuellement un ou plusieurs câbles de télécommunications à fibres optiques 6 dans une gaine commune sensiblement cylindrique 1.

En référence aux figures 4 et 5, une extrémité d'au moins un câble à fibres optiques 6i à installer est fixée au moyen d'au moins une agrafe 3 contre l'extrémité de la face inférieure 2i du ruban de tirage 2. Puis le ruban de tirage 2 solidaire du câble 6i s'étendant librement depuis son extrémité suspendue sous le ruban de tirage 2 pénètre dans une extrémité d'entrée de la gaine 1 et glisse dans la gaine 1 en étant tiré par un moyen de tirage préalablement enfilé dans la gaine 1 afin que le câble soit guidé dans la gaine 1.

Le moyen de tirage est une aiguille classique relié par un fil traversant la gaine à l'extrémité du ruban de tirage 2 lorsque le câble 6i est le premier à être installé dans la gaine. Le plus souvent, le moyen de tirage est un ruban de tirage selon l'invention ayant déjà servi à installer un câble précédent dans la gaine et laissé dans la gaine en attente de l'installation du prochain câble 6i à installer à la demande en fonction de besoin en débit de transmission notamment ; une extrémité du câble précédent saillant de l'extrémité d'entrée de la gaine est fixée, par exemple par agrafe, à l'extrémité du ruban de tirage 2 solidaire du câble à installer 6i. Après l'installation du câble à fibres optiques 6i dans 1a gaine 1, c'est-à-dire lorsque l'extrémité de la face inférieure du ruban de tirage 2 à laquelle est suspendue l'extrémité du câble 6i saille d'une extrémité de sortie de la gaine 1, l'extrémité du ruban de tirage 2 est détachée du moyen de tirage précité, et l'extrémité du câble 6i est désagrafée de l'extrémité du ruban de tirage 2 dont une partie saillant de la gaine 1 peut être coupée, et est connectée par exemple soit à l'extrémité d'un autre câble à fibres optiques dans une autre gaine, soit à des dispositifs optroniques.

Grâce à la souplesse du ruban de tirage 2 et sa largeur sensiblement égale au diamètre intérieur de la gaine 1, le ruban de tirage 2 est introduit dans la gaine 1 et s'adapte au paquet de câbles existants déjà installés dans la gaine en se courbant transversalement au-dessus des câbles existants. De par sa propre élasticité, le ruban de tirage 2 a des chants longitudinaux 21 et 22 qui viennent en contact avec la surface intérieure de la gaine 1. Le ruban de tirage 2 divise la gaine en deux espaces longitudinaux a priori inégaux: un premier espace 1I délimité par la face inférieure 2I du ruban de tirage 2 sur laquelle l'extrémité du câble 6i à installer est fixée par l'agrafe 3, contenant les câbles existants déjà installés et recevant le câble à installer et un deuxième espace 1S délimité par la face supérieure 2S du ruban de tirage 2 et ne contenant aucun câble. Le dernier câble 6i à installer est toujours situé au-dessus des autres câbles déjà installés 6 pour un glissement plus aisé du ruban de tirage 2 et une réduction des risques d'entremêlement du ruban de tirage 2 et des câbles déjà installés. La largeur et la courbure transversale variable du ruban de tirage 2 dans la gaine 1 ne permet à aucun câble, tel que le câble 6a montré à la figure 4, de s'échapper de l'espace 11 pour se retrouver au-dessus du ruban de tirage 2 dans l'espace 1S. Grâce à la souplesse transversale du ruban de tirage, l'intérieur de la gaine 1 est utilisé au maximum pour installer progressivement à la demande des câbles.

En variante, les extrémités de deux câbles 6i ou plus peuvent être fixées ensemble au moyen d'une agrafe 3 ou côte à côte au moyen d'une ou plusieurs agrafes 3 contre la face inférieure du ruban de tirage 2 pour installer simultanément ces câbles dans la gaine 1.

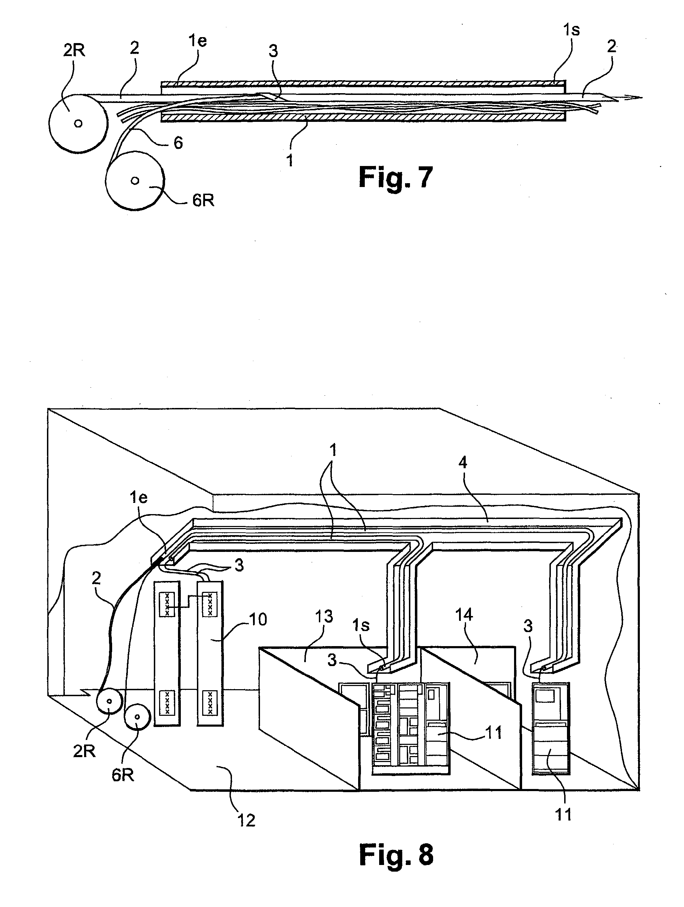

Les figures 7 et 8 représentent une première configuration d'un câblage sans raccord dans des locaux professionnels, par exemple au niveau d'un central téléphonique. L'installation d'un câble à fibres optiques 6 dans une gaine 1 à la demande nécessite une réserve de câble à fibres optiques 6R ainsi qu'une réserve de ruban de tirage 2R. Chaque réserve 6R, 2R est stockée sur une bobine localisée dans la salle 12 d'un répartiteur 10 du central téléphonique dans cette première configuration. Après fixation de l'extrémité du câble 6 par une agrafe 3 sur le ruban de tirage 2, l'extrémité de celui-ci est introduite dans une extrémité d'entrée 1e de la gaine 1 si le ruban ne traverse pas déjà la gaine, et est tirée manuellement ou par un petit treuil via le moyen de tirage précité afin que l'extrémité libre du câble 6 traverse la gaine 1 jusqu'à déboucher par une extrémité de sortie 1s de la gaine et le câble s'étende dans la gaine. L'extrémité du câble 6 est libérée de l'extrémité du ruban de tirage 3 en retirant l'agrafe 3 pour procéder à un raccordement de l'extrémité du câble 6, et le ruban de tirage 2 est laissé dans la gaine pour l'installation ultérieure d'un on plusieurs autres câbles à la demande, comme on le verra dans la suite. La bobine de câble 6R et la bobine de ruban de tirage 2R sont déroulées d'une longueur suffisante pour raccorder l'extrémité du câble 6 sortant de la gaine à des équipements 11 situés dans une pièce 13 ou 14. Dans cette première configuration, chaque pièce 13, 14 est desservie par une gaine respective 1. Le sens de tirage de la bobine de câble et de la bobine de ruban peut se faire dans les deux sens, à savoir de la salle de répartiteur 12 vers la pièce 13, 14, ou de la pièce 13, 14 vers la salle de répartiteur 12.

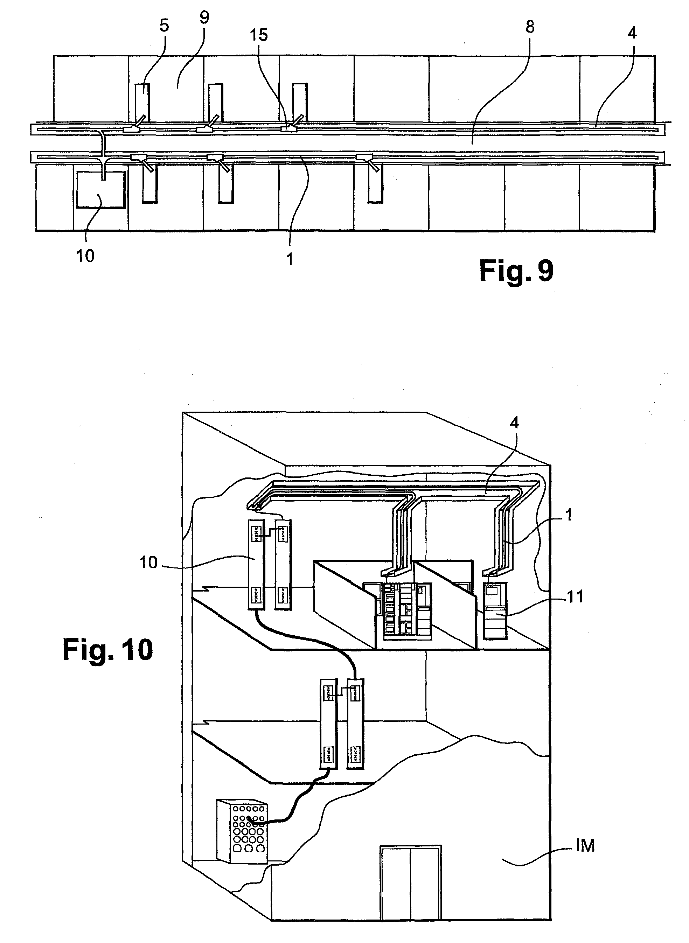

Un câblage à la demande avec le dispositif de câblage selon l'invention dans une gaine 1 présentant des raccords pour des dérivations vers des pièces peut être réalisé à l'intérieur d'un immeuble IM, qu'il soit professionnel ou résidentiel. Comme montré à la figure 9 pour le câblage d'immeuble, des gaines 1 sont posées dans au moins un rail de chemin de câble 4 suspendus dans des couloirs 8, puis dans des goulottes 5 dans des bureaux 9. Le câblage avec le dispositif de l'invention peut être réalisé par exemple dans un central téléphonique ; des gaines 1 sont posées dans des rails de chemin de câble 4 entre un ou plusieurs répartiteurs 10 et des équipements téléphoniques 11 logés à différents étages, comme montré à la figure 10. Ce câblage peut être généralisé dans d'autres domaines pour lesquels l'installation d'un ou plusieurs câbles compacts 6 dans la gaine 1 est préconisée.

Ainsi en variante, le dispositif de câblage est utilisé pour introduire un ou plusieurs câbles de télécommunications à conducteurs métalliques compacts de petit diamètre, et éventuellement un ou plusieurs câbles de télécommunications à fibres optiques compacts 6 dans une gaine commune sensiblement cylindrique 1.

Dans des deuxième et troisième configurations de câblage décrites ci-après, on utilise un raccord 15 qui est une pièce intermédiaire utilisée pour faire une dérivation d'un câble 6 vers une direction autre que la direction axiale de la gaine 1 dans laquelle le câble est introduit.

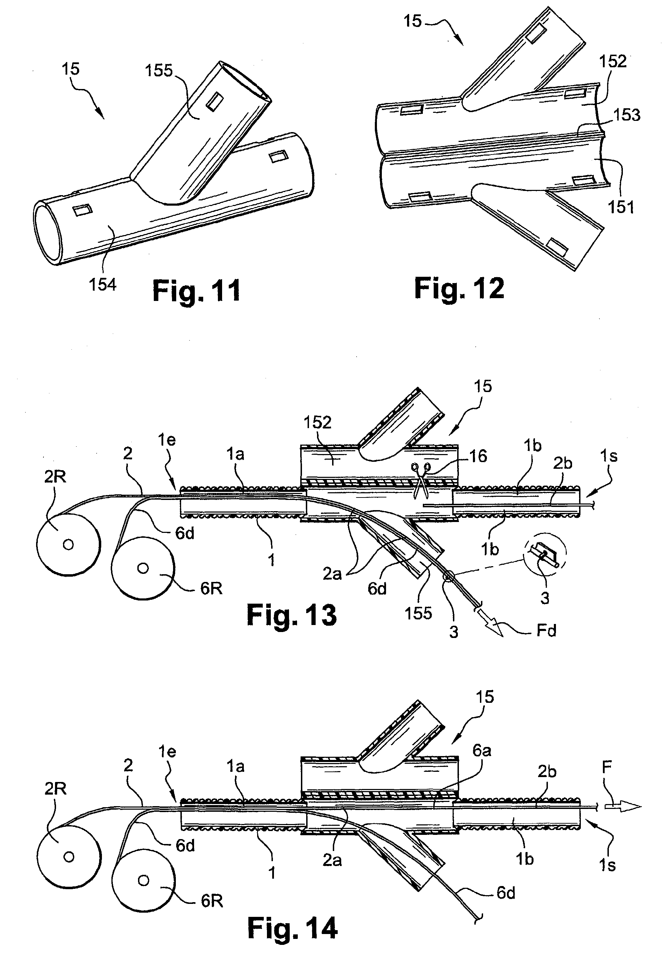

Le raccord est par exemple en matière plastique et composé de deux demi-raccords symétriques axialement 151 et 152 qui s'emboîtent l'un dans l'autre dans un plan diamétral à la gaine, comme montré à la figure 11 lorsque le raccord est fermé, et qui sont reliés l'un à l'autre par une charnière souple longitudinale latérale 153, comme montré à la figure 12 lorsque le raccord est ouvert. Le raccord 15 est démontable de la gaine, qu'il soit ou non traversé par un ou plusieurs câbles et un ruban de tirage. Le raccord 15 comporte une partie principale cylindrique 154 à positionner coaxialement à la gaine et une branche de dérivation cylindrique 155 de plus petit diamètre, oblique par rapport à la partie principale. Le diamètre intérieur de la partie principale 154 est sensiblement égal au diamètre extérieur de la gaine 1 afin de recevoir par emboîtement et serrage à force des extrémités de tronçons 1a et 1b de la gaine coupée à l'endroit où la dérivation doit être réalisée.

La posé du raccord 15 à un endroit quelconque le long de la gaine 1 pour établir une dérivation et toute ré-intervention par ouverture et fermeture du raccord sont possibles sans perturber des transmissions de signaux en service dans des câbles déjà installés dans la gaine.

Lorsqu'un raccord est à poser pour une dérivation comme montré à la figure 13, on coupe la gaine 1 et le ruban de tirage 2 dans la gaine à l'endroit 16 de la dérivation en deux tronçons de gaine 1a et 1b et deux tronçons de ruban de tirage 2a et 2b. On relie les extrémités des deux tronçons de gaine 1a et 1b en emboîtant sur celles-ci l'un 151 des demi-raccords du raccord ouvert 15 et en positionnant l'axe de la branche de dérivation 155 entre les extrémités des deux tronçons de gaine 1a et 1b. On fixe par au moins une agrafe 3 l'extrémité du câble à fibres optiques 6d à installer, issu d'une bobine de réserve de câble 6R, sur le ruban de tirage 2 issu d'une bobine de réserve de ruban 2R et confondu avec le premier tronçon de ruban de tirage 2a résultant de la coupe, s'étendant dans la gaine entre une extrémité d'entrée 1e de la gaine et l'endroit de dérivation 16. On tire le ruban de tirage 2 par l'extrémité du tronçon de ruban de tirage 2a suivant le sens Fd de l'extrémité d'entrée 1e de la gaine vers l'endroit de dérivation 16, en le passant entre les extrémités raccordées des deux tronçons de gaine 1a et 1b jusqu'à ce qu'au moins l'extrémité agrafée du câble 6d apparaisse en sortie de la branche de dérivation 155 et plus généralement jusqu'à ce qu'une longueur suffisante du câble 6d saille de la branche de dérivation 155 pour une connexion à des dispositifs optroniques. Finalement on coupe la surlongueur du ruban de tirage 2 saillant de la branche de dérivation 155. Immédiatement après cette coupe, on reprend une extrémité 2a du ruban de tirage 2 dans le tronçon de gaine 1a accessible sur le demi-raccord 151 pour relier l'extrémité 2a par agrafage à l'extrémité du deuxième tronçon de ruban de tirage 2b qui avait été laissée dans le deuxième tronçon de gaine 1b. On referme le raccord 15 en rabattant le demi-raccord 152 sur le demi-raccord 151.

Lorsque l'on souhaite intervenir à nouveau sur le ruban de tirage 2 pour installer un autre câble 6, on ouvre éventuellement le raccord 15 comme montré à la figure 14. On fixe par au moins une agrafe 3 l'extrémité dudit autre câble à fibres optiques 6 à installer sur le ruban de tirage 2 devant l'extrémité d'entrée le de la gaine. Puis on tire l'extrémité libre du ruban de tirage 2 confondue avec celle du deuxième tronçon de ruban de tirage 2b saillant de l'extrémité libre de sortie 1s de la gaine 1 confondue avec celle du deuxième tronçon de gaine 1b suivant le sens F de l'extrémité d'entrée de gaine 1e vers l'extrémité de sortie de gaine 1s jusqu'à ce qu'au moins l'extrémité agrafée du câble 6 apparaisse à l'extrémité de sortie 1s de la gaine. Toutes ces étapes sont effectuées sans perturber les transmissions dans les câbles déjà installer, y compris dans le câble dérivé 6d par la branche 155 du raccord 15. La bobine de câble 6R et la bobine de ruban de tirage 2R sont déroulées d'une longueur nécessaire au raccordement du câble 6 vers un autre endroit au-delà de l'extrémité de sortie 1s de la gaine 1.

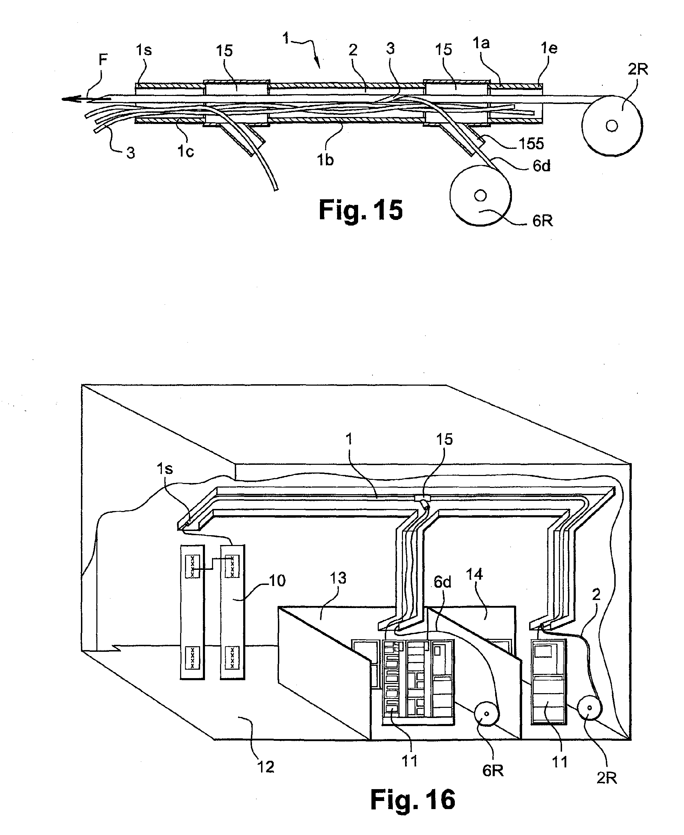

Les figures 15 et 16 représentent la deuxième configuration d'un câblage d'un central téléphonique mais en utilisant deux raccords 15 qui sont montés à des extrémités de trois tronçons raccordés 1a, 1b et 1c d'une gaine 1 pour faire des dérivations de plusieurs câbles à fibres optiques 6 respectivement vers des pièces.

Pour cette deuxième configuration, une bobine 6R d'un câble 6d est située dans une pièce 13 depuis laquelle le câble est dérivé via un raccord 15, et une bobine de ruban de tirage 2R est située dans une autre pièce 14 au niveau d'une extrémité d'entrée 1e de la gaine 1.

On ouvre le raccord 15 raccordant les deux tronçons 1a et 1b de la gaine et situé au niveau de la salle 13. On fixe par une agrafe 3 l'extrémité libre du câble 6d traversant la branche de dérivation 155 du raccord sur le ruban de tirage 2 déjà tiré dans la gaine 1 au moins jusqu'au raccord. On tire le ruban de tirage 2 avec le câble 6d suivant le sens F depuis les pièces 13 et 14 vers l'extrémité de sortie 1s de la gaine au niveau de la salle de répartiteur 12. La bobine de câble 6R et la bobine de ruban de tirage 2R sont déroulées de la longueur nécessaire pour un raccordement dans la salle de répartiteur 12.

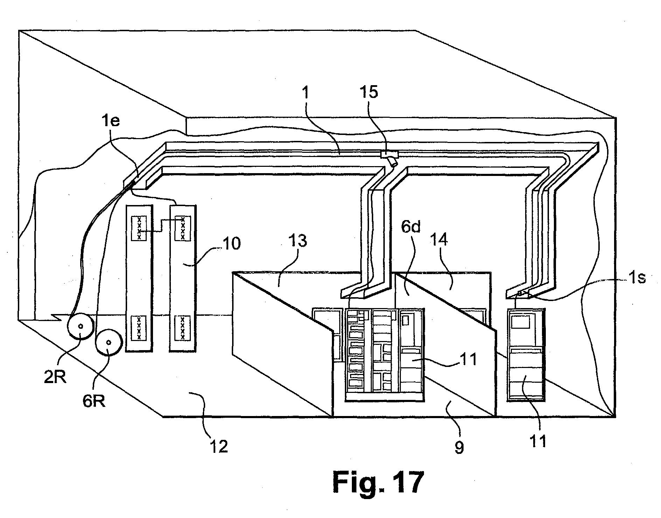

Les figures 13 et 17 représentent une troisième configuration d'un câblage d'un central téléphonique, en utilisant un raccord démontable 15 aboutant des extrémités de deux tronçons 1a et 1b d'une gaine 1 pour faire une dérivation d'un câble à fibres optiques 6d vers une pièce 13, en tirant un ruban de tirage 2 déjà posé dans la gaine jusqu'à une autre pièce 14. Dans cette troisième configuration, la bobine de câble 6R et la bobine de ruban de tirage 2R sont situées dans la salle de répartiteur 12 au niveau de l'extrémité d'entrée 1e de la gaine 1, et la gaine 1 termine son cheminement dans une autre pièce 14.

On coupe la gaine 1 à l'endroit 16 de la dérivation en deux tronçons de gaine 1a et 1b si le raccord 15 au niveau de la salle 13 n'est pas déjà monté, et on monte l'un 151 des demi-raccords du raccord ouvert 15 aux extrémités des deux tronçons de gaine 1a et 1b ; sinon on ouvre le raccord déjà monté 15 situé au niveau de la salle 13. On coupe le ruban de tirage 2 en deux tronçons de ruban de tirage 2a et 2b. L'extrémité libre du câble 6 est fixée par au moins une agrafe 3 au ruban de tirage 2 se trouvant devant l'extrémité d'entrée de gaine 1e dans la salle de répartiteur 12. On tire sur le ruban de tirage 2 confondu avec le tronçon de ruban de tirage 2a suivant le sens de l'extrémité d'entrée de gaine 1e dans la salle de répartiteur 12 vers le raccord 15 situé au niveau de la salle 13. La bobine de câble 6R et la bobine de ruban de tirage 2R sont déroulées de la longueur nécessaire pour un raccordement dans la pièce 13. Immédiatement après cette coupe, on reprend une extrémité 2a du ruban de tirage 2 dans le tronçon de gaine 1a accessible sur le demi-raccord 151 pour la relier par agrafage à l'extrémité du deuxième tronçon de ruban de tirage 2b qui avait été laissée dans le deuxième tronçon de gaine 1b. On referme le raccord 15 en rabattant le demi-raccord 152 sur le demi-raccord 151.

## Revendications

1. Dispositif de câblage pour installer un câble de télécommunications (6i) dans une gaine sensiblement cylindrique (1), comprenant un ruban mince (2) ayant une largeur sensiblement égale au diamètre intérieur de la gaine et plus long que la gaine, et un moyen (3) pour fixer une extrémité du câble (6i) à installer contre une première face (21) du ruban (2), **caractérisé en ce que** le ruban (2) est en une matière semi-rigide pour être courbé transversalement en ayant des chants longitudinaux (21, 22) qui sont en contact avec la surface intérieure de la gaine (1) afin que le ruban passe sur des câbles (6) déjà installés dans la gaine et divise la gaine en un premier espace (1I) délimité par la première face du ruban de tirage (2), contenant les câbles déjà installés (6) et recevant le câble à installer (6i) et un deuxième espace (1S) ne contenant aucun câble.

2. Dispositif conforme à la revendication 1, dans lequel le ruban (2) est un feuillard thermoplastique extrudé, ou est tissé ou tressé en fibre de polymère.

3. Dispositif conforme à la revendication 1 ou 2, dans lequel les moyens de fixation du câble (6) sur le ruban de tirage (2) se fait par agrafage, collage, soudage ou par clip fixé à force dans le ruban de tirage (2).

4. Dispositif conforme à la revendication 1 ou 2, dans lequel le moyen pour fixer (3) comprend deux éléments auto-agrippants par contact, sur le ruban de tirage (2) étant fixé l'un des éléments auto-agrippants contre lequel l'autre élément auto-agrippant est pressé manuellement afin d'enserrer l'extrémité du câble à installer.

5. Procédé de câblage pour installer un câble de télécommunications (6i) dans une gaine sensiblement cylindrique (1), par l'intermédiaire d'un ruban mince (2) ayant une largeur sensiblement égale au diamètre intérieur de la gaine et plus long que la gaine, et d'un moyen de fixation (3) pour fixer une extrémité du câble (6i) à installer contre une première face (2I) du ruban (2) devant une première extrémité (1e) de la gaine, **caractérisé en ce qu'**on tire à travers la gaine (1) le ruban (2), qui est en une matière semi-rigide, en le courbant transversalement avec des chants longitudinaux (21, 22) en contact avec la surface intérieure de la gaine (1) afin que le ruban passe sur des câbles (6) déjà installés dans la gaine et divise la gaine en un premier espace (1I) délimité par la première face du ruban (2), contenant les câbles déjà installés (6) et recevant le câble à installer (6i) et un deuxième espace (1S) ne contenant aucun câble.

6. Procédé conforme à la revendication 5, selon lequel on coupe la gaine (1) à un endroit de dérivation (16) en deux tronçons de gaine (1a, 1b), on raccorde les extrémités des deux tronçons de gaine (1a, 1b) par un moyen de raccordement ouvert (15) présentant une branche de dérivation (155), on coupe le ruban (2) à l'endroit de dérivation (16) en deux tronçons de ruban (2a, 2b), on fixe devant l'une (1e) des extrémités de l'ensemble continu de l'un (1a) des tronçons de gaine et de la branche de dérivation (155) par un moyen de fixation (3) l'extrémité du câble (6d) à installer sur le tronçon de ruban (2a) s'étendant dans le tronçon de gaine (1a), et on tire le tronçon de ruban équipé du moyen de fixation (3) fixant l'extrémité du câble (6d) à installer en direction de la branche de dérivation (155).

7. Procédé conforme à la revendication 5, selon lequel on ouvre un moyen de raccordement (15) présentant une branche de dérivation (155) et raccordant deux tronçons de gaine (1a, 1b), on coupe le ruban (2) dans le moyen raccordement ouvert (15) en deux tronçons de ruban (2a, 2b), on fixe devant l'une (1e) des extrémités de l'ensemble continu de l'un (1a) des tronçons de gaine et de la branche de dérivation (155) par un moyen de fixation (3) l'extrémité du câble (6d) à installer sur le tronçon de ruban (2a) s'étendant dans ledit un tronçon de gaine (1a), et on tire le tronçon de ruban équipé du moyen de fixation (3) jusqu'à ce qu'au moins l'extrémité fixée du câble apparaisse à l'extrémité libre (1s) de l'autre tronçon de gaine (1b).

8. Procédé conforme à la revendication 6 ou 7, selon lequel on reprend, avant de refermer le moyen raccordement (15), dans le tronçon de gaine (1a) accessible sur le moyen de raccordement ouvert (15) une extrémité du tronçon de ruban de tirage (2a) libérée du moyen de fixation (3) pour la relier (6a) à l'extrémité de l'autre tronçon de ruban de tirage (2b) qui avait été laissée dans l'autre tronçon de gaine (1b), on referme le moyen raccordement (15), on fixe par un moyen de fixation (3) l'extrémité d'un autre câble (6) à installer sur le ruban devant ladite une extrémité (le) de l'ensemble continu de l'un (1a) des tronçons de gaine et de la branche de dérivation (155), et on tire le tronçon de ruban équipé du moyen de fixation (3) jusqu'à ce qu'au moins l'extrémité fixée du câble apparaisse à l'extrémité libre (1s) de l'autre tronçon de gaine (1b).

9. Procédé conforme à l'une quelconque des revendications 5 à 8, selon lequel on ouvre un moyen raccordement (15) raccordant deux tronçons (1a, 1b) de la gaine présentant une branche de dérivation (155), on fixe par un moyen de fixation (3) l'extrémité d'un câble (6d) traversant la branche de dérivation sur le ruban (2) déjà tiré dans la gaine (1) au moins jusqu'au moyen raccordement, et on tire le ruban (2) vers une extrémité de sortie (1s) de la gaine.
